(19) Europäisches Patentamt
European Patent Office
Office européen des brevets

(11) Publication number: **0 146 738 B1**

(12) **EUROPEAN PATENT SPECIFICATION**

(45) Date of publication of patent specification: **19.12.90**

(51) Int. Cl.$^5$: **A 23 K 1/16**, C 07 C 215/28

(21) Application number: **84113280.6**

(22) Date of filing: **05.11.84**

(54) **Antimicrobial animal feed additive compositions.**

(30) Priority: **23.12.83 US 564805**

(43) Date of publication of application:
**03.07.85 Bulletin 85/27**

(45) Publication of the grant of the patent:
**19.12.90 Bulletin 90/51**

(84) Designated Contracting States:
**AT BE CH DE FR GB IT LI LU NL SE**

(56) References cited:
**FR-A-2 515 177**
**US-A-3 536 712**
**US-A-4 404 222**

**Ullmanns Encyklopädie der technischen Chemie, Band 12 (1976), pages 46, 47**

**The file contains technical information submitted after the application was filed and not included in this specification**

(73) Proprietor: **AMERICAN CYANAMID COMPANY**
**1937 West Main Street P.O. Box 60**
**Stamford Connecticut 06904-0060 (US)**

(72) Inventor: **Ingle, Donald Lee**
**3 Bridle Path**
**Lawrenceville New Jersey (US)**
Inventor: **Beck, John Richard**
**5 Shelly Lane**
**Hamilton Square New Jersey 08690 (US)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 146 738 B1**

## Description

Background of the Invention

The present invention relates to antimicrobial edible animal feed additive compositions and antimicrobial edible animal feedstuff compositions containing certain substituted 1-(aminophenyl)-2-aminoethanols, or the pharmaceutically-acceptable acid-addition salts thereof, in combination with certain antimicrobial agents. Additionally, this invention relates to a method for increasing the feed efficiency of warm-blooded animals and improving the lean meat to fat ratio of said animals.

Several references disclose the use of 1-(aminodihalophenyl)-2-aminoethanols and their derivatives. For instance, United States Patent 3,536,712 specifically discloses methods for preparing such compounds, as well as the use of such compounds in warm-blooded animals for enhancing blood circulation, as bronchodilators, analgesics, sedatives and antipyretics.

Other such 1-(aminodihalophenyl)-2-aminoethanols and their derivatives are useful as analgesics, broncholytics, anti-inflammatives, uterine spasmolytics, β-mimetics and/or β-blockers, body fat mobilizers and anti-allergics (Japanese Kokai 77 83,619; German Offenlegungsschrift 2,804,625 (1979); German Offenlegunsschrift 2,157,040 (1973); German Offenlegungsschrift 2,261,914 (1974); European Patent Application 8,715 (1980); and Netherlands Patent Application 7,303,612 (1973)). However, these references fail to disclose, teach or suggest the animal feed additive combinations of the present invention.

United States Patents 4,404,222 and 4,407,819 do relate to methods for depressing fat deposition in warm-blooded animals by administering effective amounts of 1-(aminophenyl)-2-aminoethanes, substituted products thereof or certain acid-addition salts. Although these compounds are disclosed as antilipogenics, these references fail to specifically disclose the compatability of these aminoethanols in combination with antimicrobial agents. But even more importantly, these references fail to recognize that animal feed additives or edible animal feeds containing formula (I) compounds with antimicrobials will increase feed efficiency as compared with feeds containing only the antimicrobials, while reducing fat deposition, resulting in a larger, yet leaner food-producing animal.

Summary of the Invention

The present invention, therefore, relates to animal feed additive compositions and edible animal feedstuff compositions used for increasing feed efficiency and improving the lean meat to fat ratios of warm-blooded animals comprised of certain substituted 1-(aminophenyl)-2-aminoethanols, or the pharmaceutically-acceptable acid-addition salts thereof, represented by the following structural formula (I):

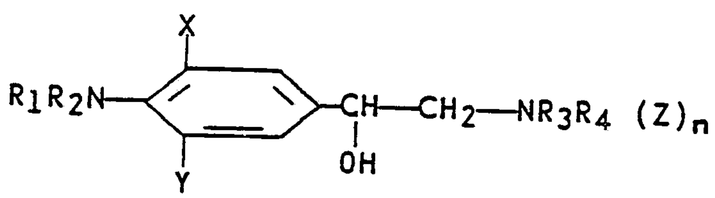

(I)

wherein $R_1$ is hydrogen or $C_1$—$C_{14}$ alkyl; $R_2$ is hydrogen or methyl, provided that when $R_1$ is $C_2$—$C_{14}$ alkyl, then $R_2$ is hydrogen; $R_3$ and $R_4$ are each hydrogen or $C_1$—$C_6$ alkyl; X and Y are each hydrogen, bromine, chlorine, fluorine, iodine or cyano; Z is preferably hydrochloric, phosphoric, acetic, propionic, citric, gluconic, abietic, oleic, linoleic, linolenic, tall oil fatty acids, or mixtures thereof; and n is an integer of 0 or 1; and antimicrobial agents such as anticoccidials, growth-promoting antimicrobials and therapeutic antimicrobials, or mixtures thereof.

It is an object of the present invention to provide said composition useful as animal feed additive compositions as well as edible animal feedstuff compositions themselves.

Furthermore, it is also an object of this invention to provide a method for increasing feed efficiency, while reducing the level of body fat, in domestic and farm animals administered said animal feed additives or edible animal feedstuff compositions.

### Description of the Invention

Substituted 1-(aminophenyl)-2-aminoethanols

The present invention contains certain substituted 1-(aminophenyl)-2-aminoethanols and the pharmaceutically-acceptable acid-addition salts thereof, represented by formula (I) below:

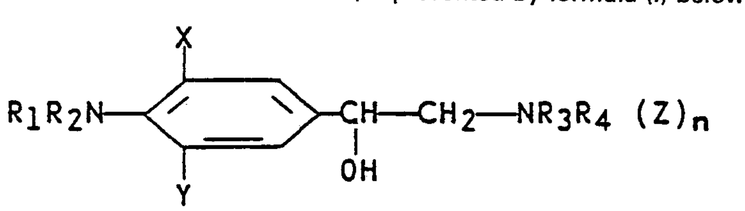

(I)

wherein $R_1$ is hydrogen or $C_1$—$C_{14}$ alkyl; $R_2$ is hydrogen or methyl, provided that when $R_1$ is $C_2$—$C_{14}$ alkyl, then $R_2$ is hydrogen; $R_3$ and $R_4$ are each hydrogen or $C_1$—$C_6$ alkyl; X and Y are each hydrogen, bromine, chlorine, fluorine, iodine or cyano; Z is preferably hydrochloric, phosphoric, acetic, propionic, citric, gluconic, abietic, oleic, linoleic, linolenic, tall oil fatty acids, or mixtures thereof; and n is an integer of 0 or 1.

The preferred acid addition salts of the substituted 1-(aminophenyl)-2-aminoethanols include abietic acid, linolenic acid, linoleic acid, oleic acid, acetic acid, tall oil fatty acids, and mixtures thereof.

The preferred formula (I) compounds include 4-amino-α[*tert*-butylamino)methyl]-3,5-dichlorobenzyl alcohol and 5-[1-hydroxy-2-(isopropylamino)ethyl]anthranilonitrile, with the 5-[1-hydroxy-2-(isopropylamino)ethyl]anthranilonitrile being the most preferred.

When these compounds are used in animal feed additive compositions in amounts to increase feed efficiency and improve lean meat to fat ratio, about 0.00001% to 0.0001% (0.10 to 10.0 ppm), by weight, of the compound or the desired acid-addition salt is present in the final edible animal feedstuff composition.

Antimicrobials

Antimicrobials useful in the present invention include three types, anticoccidials, growth-promoting antimicrobials and therapeutic antimicrobials. Some suitable anticoccidials include prinicin, salinomycin, monensin, naracin, lasalocid, robinedine, aprinocid, amprolium, nicarbazine, among others, or mixtures thereof, with prinicin being preferred.

Examples of growth-promoting antimicrobials useful in the present compositions are avoparcin, bacitracin methylene disalicylate, bacitracin zinc, virginiamycin, penicillin, chlorotetracycline, tylosin, bambermycins, oxytetracycline, erythromycin, roxarsone, nitrovin, carbadox, or mixtures thereof, with penicillin being preferred.

The therapeutic antimicrobials used in the compositions of the present invention include tiamulin, lincomycin, oleondomycin, neomycin, dimetridazole, furazolidone, sulfa drugs such as sulfamethazine and sulfamethoxy pyridizine, or mixtures thereof, with tiamulin being preferred.

About 0.0001% to 0.02% (1 to 200 ppm) of these antimicrobials should be present in the final edible animal feedstuff compositions of the present invention.

In a preferred embodiment of the present invention, an edible animal feed additive composition (Premix) containing 0.00001% to 0.0001%, by weight, of 5-[1-hydroxy-2-(isopropylamino)ethyl]anthranilonitrile, or the pharmaceutically-acceptable acid-addition salt thereof, and 0.0001% to 0.02%, by weight, of an antimicrobial agent are administered in an edible animal feedstuff composition to seven-day old animals.

Likewise, in another preferred embodiment of the present invention, 0.0001% to 0.02%, by weight of the antimicrobial agent and 0.00001% to 0.0001%, by weight, of 4-amino-α[(*tert*-butyl-amino)methyl]-3,5-dichlorobenzyl alcohol, or the pharmaceutically-acceptable acid-addition salt thereof, is mixed into a suitable edible animal feedstuff composition and administered to a food-producing animal when said animal is seven days old.

It has been unexpectedly discovered that the animal feed aditive compositions of the present invention result in healthy, leaner, yet larger, animals when feed is administered to animals at seven days of age.

The present invention is further illustrated by the following non-limiting examples.

Example 1

Oleic acid salt of 4-amino-α[(*tert*-butylamino)methyl]-3,5-dichlorobenzyl alcohol

A solution of oleic acid (5.65 grams) 0.02 mol) in methylene chloride (5 ml) is added to a warmed-up slurry of 4-amino-α[(*tert*-butylamino)methyl]-3,5-dichlorobenzyl alcohol (5.54 grams, 0.02 mol) in methylene chloride (30 ml). The mixture is stirred for a few minutes, and the resultant solution is filtered and evaporated to dryness to afford the title product, a slightly sticky solid, mp 54°C—56°C. The product is soluble in ether, hexane, methanol, chloroform, and ethylene dichloride.

Example 2

Oleic acid salt of 5-[1-hydroxy-2-(isopropylamino)ethyl]anthranilonitrile

A warmed solution of oleic acid (3.43 grams, 0.012 mol) in methanol (105 ml) is added to a warmed solution of 5-[1-hydroxy-2-(isopropylamino)ethyl]anthranilonitrile (2.66 grams, 0.012 mol) in methanol (210 ml). The mixture is stirred for a few minutes at just below boiling, and the resulting solution evaporated to dryness to afford the title product as a solid, mp 75°C—80°C.

Example 3

Evaluation of combinations — chick study

One day old Hubbard X Hubbard broiler chicks from Kerr Hatcheries, Frenchtown, New Jersey are sorted into equal weight outcome groups of five males and five females per pen. Starting and ending body weights per pen for the 17-day test period are obtained at seven and 24 days of age, respectively.

The basal diet used in these studies is Broiler Ration No. 453 (see description below) which is supplied *ad libitum* and to which the present animal feed additive composition is added.

DIET

Broiler Ration No. 453

| Component | Percent by Weight |
|---|---|
| Ground yellow corn | 53.45 |
| Soybean oil meal (49%) | 28.00 |
| Menhaden fish meal (60%) | 5.00 |
| Corn gluten meal (60%) | 5.00 |
| Dehydrated alfalfa meal (17%) | 2.00 |
| Stabilized fat | 4.00 |
| Dicalcium phosphate | 1.20 |
| Ground limestone | 0.50 |
| Sodium chloride | 0.30 |
| Trace minerals mixture | 0.05 |
| Vitamin premix | 0.50 |
| | 100.00 |

1.5 kg of diet containing an antimicrobial agent is prepared for each pen for day one to day seven feeding. 10 kg of diet containing representative samples of antimicrobial agent in combination with a formula (I) substituted 1-(aminophenyl)-2-aminoethanol is prepared for each pen for the following 17-day test period, chick ages of seven to 24 days.

Feed is withheld from the chicks approximately 12 hours before sacrifice.

Representative (200 g) whole ground bird tissue samples are obtained for each test replicate (four pens of 10 birds) and frozen for protein, moisture, and fat content analysis.

Resultant data are reported in Table I.

TABLE I

Effect of Antimicrobials and Oleate Salts of (A) 5-[1-hydroxy-2-(isopropylamino)-ethyl]anthranilonitrile and (B) 4-amino-α-[*Tert*-butylamino)methyl]-3,5-dichlorobenzyl alcohol in Animal Feed Additive

| Compound | Dose (ppm) | Percent Fat | Percent Reduction in Fat | Percent Improvement in Feed Efficiency | Enhancement in Feed Efficiency as Percentage |
|---|---|---|---|---|---|
| Control | — | 11.91 | — | — | — |
| (A) | 0.25 | 11.40 | 7.3 | 1.9 | — |
| Penicillin | 200 | 13.10 | — | 7.1 | — |
| Penicillin/(A) | 200/0.25 | 11.64 | 11.14 | 8.6 | 21.4 |
| Chlorotetracycline | 50 | 11.56 | — | 4.5 | — |
| Chlorotetracycline/(A) | 50/0.25 | 11.27 | 2.50 | 4.6 | 2.2 |
| Bacitracin methylene disalicylate | 50 | 11.63 | — | 6.4 | — |
| Bacitracin methylene disalicyclate/(A) | 50/0.25 | 11.62 | — | 8.3 | 29.7 |
| Avoparcin | 10 | 12.20 | — | 2.8 | — |
| Avoparcin/(A) | 10/0.25 | 11.80 | 3.27 | 5.5 | 96.4 |

TABLE I (Continued)

| Compound | Dose (ppm) | Percent Fat | Percent Reduction in Fat | Percent Improvement in Feed Efficiency | Enhancement in Feed Efficiency as Percentage |
|---|---|---|---|---|---|
| Virginiamycin | 10 | 12.18 | — | 6.9 | — |
| Virginiamycin/(A) | 10/0.25 | 11.66 | 4.26 | 6.0 | −13.0 |
| Bambermycins | 2 | 10.07 | — | 1.5 | — |
| Bambermycins/(A) | 2/0.25 | 9.50 | 5.66 | 3.3 | 12.0 |
| Tiamulin | 5 | 10.59 | — | 1.1 | — |
| Tiamulin/(A) | 5/0.25 | 9.40 | 10.39 | 1.6 | 45.4 |
| Tylosin | 100 | 10.89 | — | 2.8 | — |
| Tylosin/(A) | 100/0.25 | 9.99 | 8.26 | 7.8 | 178.6 |
| Dimetridazole | 200 | 10.49 | — | 2.7 | — |
| Dimetridazole/(A) | 200/0.25 | 9.71 | 7.44 | 4.2 | 55.6 |
| Carbadox | 25 | 10.49 | — | 6.5 | — |
| Carbadox/(A) | 25/0.25 | 9.44 | 10.00 | 5.1 | −21.5 |
| Monensin | 121 | — | — | 1.42 | — |
| Monensin/(A) | 121/0.25 | — | — | 3.53 | 148.0 |
| Penicillin | 200 | 10.94 | — | 5.5 | — |
| Penicillin/(B) | 200/1 | 10.11 | 7.6 | 7.6 | 38.2 |
| Chlorotetracycline | 50 | 10.67 | — | 5.2 | — |
| Chlorotetracycline/(B) | 50/1 | 9.88 | 7.4 | 5.3 | 1.9 |
| Bacitracin methylene disalicylate | 50 | 10.10 | — | 3.4 | — |
| Bacitracin methylene disalicylate/(B) | 50/1 | 9.81 | 2.9 | 4.9 | 44.1 |
| Avoparcin | 10 | 10.32 | — | 5.2 | — |
| Avoparcin/(B) | 10/1 | 9.31 | 9.8 | 6.6 | 26.9 |
| Virginiamycin | 10 | 11.08 | — | 6.7 | — |
| Virginiamycin/(B) | 10/1 | 10.23 | 8.2 | 7.0 | 4.5 |
| Bambermycins | 2 | 10.28 | — | 5.7 | — |
| Bambermycins/(B) | 2/1 | 9.75 | 5.1 | 6.2 | 8.8 |
| Nitrovin | 10 | 10.22 | — | 5.1 | — |
| Nitrovin/(B) | 10/1 | 9.60 | 6.1 | 5.2 | 1.9 |

As can be seen, the data in Table I demonstrate improvements in feed efficiency concomitant with reduction of fat deposition. Surprisingly, this effect is more evident when the combination of the invention is given to animals which contain a higher percentage of fat. For example, in Table I, the percent fat reduction of animals fed only ethanolamine is only 7.3%, whereas, birds fed penicillin in comparison to penicillin with ethanolamine increases this fat reduction to 11.14%. Thus, this indicates an improvement in reducing the fat to lean meat ratio in larger birds, an unexpected result.

**Claims**

1. An edible animal feedstuff composition used for increasing feed efficiency and improving the lean meat to fat ratios of warm-blooded animals, said composition containing an antimicrobial agent; and a

substituted 1-(aminophenyl)-2-aminoethanol, or the pharmaceutically-acceptable acid-addition salts thereof, represented by structural formula (I),

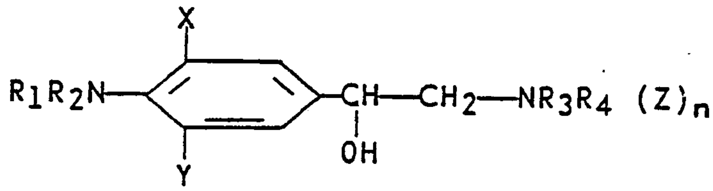

wherein $R_1$ is hydrogen or $C_1$—$C_{14}$ alkyl; $R_2$ is hydrogen or methyl, provided that when $R_1$ is $C_2$—$C_{14}$ alkyl, then $R_2$ is hydrogen; $R_3$ and $R_4$ are each hydrogen or $C_1$—$C_6$ alkyl; X and Y are each hydrogen, bromine, chlorine, fluorine, iodine or cyano; Z is an acid which results in pharmaceutically-acceptable acid-addition salts thereof; and n is an integer of 0 or 1.

2. An edible animal feedstuff composition according to Claim 1, wherein said antimicrobial agent is present in amounts, on a weight basis, of about 0.0001% to 0.02% (1 to 200 ppm) and said substituted 1-(aminophenyl)-2-aminoethanol, or the pharmaceutically-acceptable acid-addition salts thereof, is present in amounts, on a weight basis, of about 0.0000001% to 0.001% (0.001 to 10.0 ppm); and wherein Z is hydrochloric, phosphoric, acetic, propionic, citric, gluconic, abietic, oleic, linoleic, linolenic, tall oil fatty acids, or mixtures thereof; and n is 1.

3. An edible animal feedstuff composition according to Claim 2, wherein said formula (I) compound is 4-amino-α[*tert*-butylamino)methyl]3,5-dichlorobenzyl alcohol; wherein said formula (I) pharmaceutically-acceptable acid-addition salt is oleic acid; wherein said formula (I) compound is 5-[1-hydroxy-2-(isopropyl-amino)-ethyl]anthranilonitrile; or wherein Z is oleic acid when formula (I) is 5-[1-hydroxy-2-(isopropyl-amino)-ethyl]anthranilonitrile.

4. An edible animal foodstuff composition according to Claim 3, wherein said antimicrobial agent is selected from anticoccidials, growth-promoting antimicrobials, therapeutic antimicrobials, or mixtures thereof.

5. An edible animal feedstuff composition according to Claim 4, wherein said anticoccidials are selected from prinicin, salinomycin, monensin, naracin, lasalocid, robinedine, aprinocid, amprolium, nicarbazine, or mixtures thereof; wherein said growth-promoting antimicrobials are selected from avoparcin, bacitracin methylene disalicylate, bacitracin zinc, virginiamycin, penicillin, chlorotetracycline, tylosin, bambermycin, oxytetracycline, erythromycin, roxarsone, nitrovin, carbadox, or mixtures thereof; wherein said therapeutic antimicrobials are selected from tiamulin, lincomycin, oleandomycin, neomycin, dimetridazole, furazolidone, sulfa drugs such as sulfomethazine and sulfamethoxy pyridizine, or mixtures thereof.

6. An edible animal feedstuff composition according to Claim 5, wherein said anticoccidial is principin; wherein said growth-promoting antimicrobial is penicillin; or wherein said therapeutic antimicrobial is tiamulin.

7. An animal feed additive composition useful in an edible animal feedstuff composition for use in increasing feed efficiency and improving the lean meat to fat ratios of warm-blooded animals, said animal feed additive composition characterized by an edible animal feedstuff; an antimicrobial agent; and a substituted 1-(aminophenyl)-2-aminoethanol, or the pharmaceutically-acceptable acid-addition salts thereof, represented by structural formula (I),

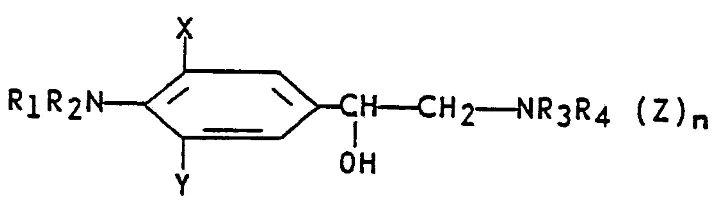

wherein $R_1$ is hydrogen or $C_1$—$C_{14}$ alkyl; $R_2$ is hydrogen or methyl, provided that when $R_1$ is $C_2$—$C_{14}$ alkyl, then $R_2$ is hydrogen; $R_3$ and $R_4$ are each hydrogen or $C_1$—$C_6$ alkyl; X and Y are each hydrogen, bromine, chlorine, fluorine, iodine or cyano; Z is an acid which results in pharmaceutically-acceptable acid-addition salts thereof; and n is an integer of 0 or 1.

8. An animal feed additive composition according to Claim 7, wherein said antimicrobial agent, when used in said edible animal feedstuff, is present in amounts, on a weight basis, of about 0.0001% to 0.02% (1 to 200 ppm) and said substituted 1-(aminophenyl)-2-aminoethanol, or the pharmaceutically-acceptable acid-addition salts thereof, when used in said edible animal feedstuff composition, is present in amounts, on a weight basis, of about 0.0000001% to 0.001% (0.001 to 10.0 ppm); and wherein Z is hydrochloric, phosphoric, acetic, propionic, citric, gluconic, abietic, oleic, linoleic, linolenic, tall oil fatty acids, or mixtures thereof; and n is 1.

9. An animal feed additive composition according to Claim 8, wherein said formula (I) compound is 4-amino-α[*tert*-butylamino)methyl]-3,5-dichlorobenzyl alcohol; wherein Z is oleic acid; where said formula (I)

compound is 5[1-hydroxy-2-(isopropyl-amino)ethyl]anthranilonitrile; or wherein Z is oleic acid when formula (I) is 5[1-hydroxy-2-(isopropyl-amino)ethyl]anthranilonitrile.

10. An animal feed additive composition according to Claim 9, wherein said antimicrobial agent is selected from anticoccidials, growth-promoting antimicrobials, therapeutic antimicrobials, or mixtures thereof.

11. An animal feed additive composition according to Claim 10, wherein said anticoccidials are selected from prinicin, salinomycin, monensin, naracin, lasalocid, robinedine, aprinocid, amprolium, nicarbazine, or mixtures thereof; wherein said growth-promoting antimicrobials are selected from avoparcin, bacitracin methylene disalicylate, bacitracin zinc, virginiamycin, penicillin, chlorotetracycline, tylosin, bambermycin, oxytetracycline, erythromycin, roxarsone, nitrovin, carbadox, or mixtures thereof; or wherein said therapeutic antimicrobials are selected from tiamulin, lincomycin, oleondomycin, neomycin, dimetridazole, furazolidone, sulfa drugs such as sulfomethazine and sulfamethoxy pyridizine, or mixtures thereof.

12. An animal feed additive composition according to Claim 11, wherein said anticoccidial is prinicin; wherein said growth-promoting antimicrobial is penicillin; or wherein said therapeutic antimicrobial is tiamulin.

13. A method for increasing feed efficiency and improving the lean meat to fat ratios of warm-blooded animals, said method characterized by administering a feed-efficiency-increasing-and-lean-meat-to-fat-ratio-improving amount of an edible animal feedstuff composition containing an antimicrobial agent; and a substituted 1-(aminophenyl)2-aminoethanol, or the pharmaceutically-acceptable acid-addition salts thereof, represented by structural formula (I),

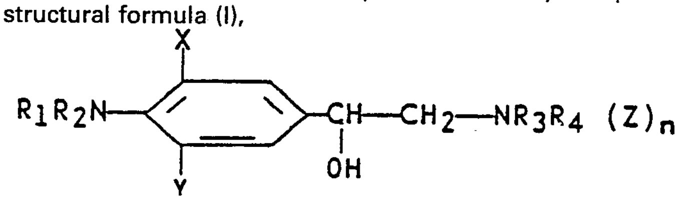

wherein $R_1$ is hydrogen or $C_1$—$C_{14}$ alkyl; $R_2$ is hydrogen or methyl, provided that when $R_1$ is $C_2$—$C_{14}$ alkyl, then $R_2$ is hydrogen; $R_3$ and $R_4$ are each hydrogen or $C_1$—$C_6$ alkyl; X and Y are each hydrogen, bromine, chlorine, fluorine, iodine or cyano; Z is an acid which results in pharmaceutically-acceptable acid-addition salts thereof; and n is an integer of 0 or 1; to said warm-blooded animals when seven days of age.

14. A method according to Claim 13, wherein said antimicrobial agent is present in amounts, on a weight basis, of about 0.0001% to 0.02% (1 to 200 ppm) and said substituted 1-(aminophenyl)-2-aminoethanol, or the pharmaceutically-acceptable acid-addition salts thereof, is present in amounts, on a weight basis, of about 0.0000001% to 0.001% (0.001 to 10.0 ppm); and wherein Z is hydrochloric, phosphoric, acetic, propionic, citric, gluconic, abietic, oleic, linoleic, linolenic, tall oil fatty acids, or mixtures thereof; and n is 1.

15. A method according to Claim 14, wherein said formula (I) compound is 4-amino-α-[*tert*-butylamino)methyl]-3,5-dichlorobenzyl alcohol; wherein said formula (I) pharmaceutically-acceptable acid-addition salt is oleic acid; wherein said formula (I) compound is 5-[1-hydroxy-2-(isopropylamino)-ethyl]anthranilonitrile; or wherein Z is oleic acid when formula (I) is 5-[1-hydroxy-2-(isopropylamino)-ethyl]anthranilonitrile.

16. A method according to Claim 15, wherein said antimicrobial agent is selected from anticoccidials, growth-promoting antimicrobials, therapeutic antimicrobials, or mixtures thereof.

17. A method according to Claim 16, wherein said anticoccidials are selected from prinicin, salinomycin, monensin, naracin, lasalocid, robinedine, aprinocid, amprolium, nicarbazine, or mixtures thereof; wherein said growth-promoting antimicrobials are selected from avoparcin, bacitracin methylene disalicylate, bacitracin zinc, virginiamycin, penicillin, chlorotetracycline, tylosin, bambermycin, oxytetracycline, erythromycin, roxarsone, nitrovin, carbacox, or mixtures thereof; or wherein said therapeutic antimicrobials are selected from tiamulin, lincomycin, oleandomycin, neomycin, dimetridazole, furazolidone, sulfa drugs such as sulfomethazine and sulfamethoxy pyridizine, or mixtures thereof.

18. A method according to Claim 17, wherein said anticoccidial is prinicin; wherein said growth-promoting antimicrobial is penicillin; or wherein said therapeutic antimicrobial is tiamulin.

## Patentansprüche

1. Eßbare Tierfutterzusammensetzung zur Steigerung der Futtereffizienz und zur Verbesserung der Fleisch-zu-Fett-Verhältnisse von warmblütigen Tieren, wobei die Zusammensetzung ein antimikrobielles Mittel enthält, sowie ein substituiertes 1-(Aminophenyl)-2-aminoethanol oder die pharmazeutisch akzeptablen Säureadditionssalze desselben, dargestellt durch die Strukturformel (I)

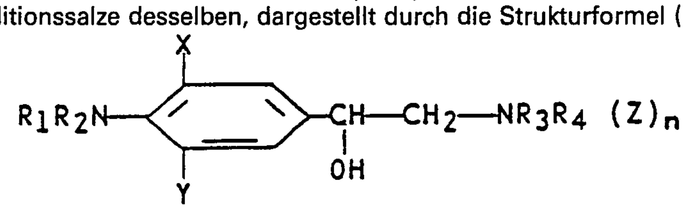

wobei $R_1$ für Wasserstoff oder $C_1$—$C_{14}$-Alkyl steht; $R_2$ für Wasserstoff oder Methyl steht, mit der Maßgabe, daß dann, wenn $R_1$ für $C_2$—$C_{14}$ steht, $R_2$ für Wasserstoff steht; $R_3$ und $R_4$ jeweils Wasserstoff oder $C_1$—$C_6$-Alkyl sind; X und Y jeweils Wasserstoff, Brom, Chlor, Fluor, Jod oder Cyano sind; Z für eine Säure steht, die zu pharmazeutisch akzeptablen Säureadditionssalzen derselben führt; und n eine ganze Zahl von 0 oder 1 ist.

2. Eßbare Tierfutterzusammensetzung gemäß Anspruch 1, wobei das antimikrobielle Mittel in Mengen anwesend ist, die auf Gewichtsbasis etwa 0,0001% bis 0,02% (1 bis 200 ppm) betragen und wobei das substituierte 1-(Aminophenyl)-2-aminoethanol oder die pharmazeutisch akzeptablen Säureadditionsalze desselben in Mengen anwesend sind, die auf Gewichtbasis etwa 0,0000001% bis 0,001% (0,001 bis 10,0 ppm) betragen; und wobei Z für Chlorwasserstoffsäure, Phosphorsäure, Essigsäure, Propionsäure, Zitronensäure, Gluconsäure, Abietsäure, Ölsäure, Linolsäure, Linolensäure, Tallölfettsäure oder Mischungen derselben steht; und n für 1 steht.

3. Eßbare Tierfutterzusammensetzung gemäß Anspruch 2, wobei die Verbindung der Formel (I) 4-Amino-α[*tert*-butylamino)methyl]-3,5-dichlorobenzylalkohol ist; wobei das pharmazeutisch akzeptable Säureadditionsalz der Formel (I) das der Ölsäure ist; wobei die Verbindung der Formel (I) 5-[1-Hydroxy-2-(isopropylamino)ethyl]anthranilonitril ist; oder wobei Z Ölsäure ist, falls die Formel (I) 5-[1-hydroxy-2-(isopropylamino)ethyl]anthranilonitril bedeutet.

4. Eßbare Tierfutterzusammensetzung gemäß Anspruch 3, wobei das antimikrobielle Mittel ausgewählt ist aus Anticoccidioismitteln, wachstumfördernden antimikrobiellen Mitteln, therapeutischen antimikrobiellen Mitteln oder Mischungen derselben.

5. Eßbare Tierfutterzusammensetzung gemäß Anspruch 4, wobei die Anticoccidiosismittel ausgewählt sind aus Prinicin, Salinomycin, Monensin, Naracin, Lasalocid, Robinedin, Aprinocid, Amprolium, Nicarabazin oder Mischungen derselben; wobei die wachstumsfördernden antimikrobiellen Mittel ausgewählt sind aus Avoparcin, Bacitracin-methylendisalicylat, Bacitracinzink, Virginiamycin, Penicillin, Chlorotetracyclin, Tylosin, Bambermycin, Oxytetracyclin, Erythromycin, Roxarsone, Nitrovin, Carbadox oder Mischungen derselben; wobei die therapeutischen antimikrobiellen Mittel ausgewählt sind aus Tiamulin, Lincomycin, Oleandomycin, Neomycin, Dimetridazol, Furazolidone, Sulfa-Arzneimitteln, wie beispielsweise Sulfomethazin und Sulfamethoxypyridizin oder Mischungen derselben.

6. Eßbare Tierfutterzusammensetzung gemäß Anspruch 5, wobei das Anticoccidiosismittel Prinicin ist; wobei das wachstumsfördernde antimikrobielle Mittel Penicillin ist; oder wobei das therapeutische antimikrobielle Mittel Tiamulin ist.

7. Tierfutteradditivzusammensetzung zur Verwendung in einer eßbaren Tirfutterzusammensetzung zur Steigerung der Futtereffizienz und zur Verbesserung der Fleisch-zu-Fett-Verhältnisse von warmblütigen Tieren, wobei die Tierfutteradditivzusammensetzung gekennzeichnet ist durch ein eßbares Tierfutter; ein antimikrobielles Mittel und ein substituiertes 1-(Aminophenyl)-2-aminoethanol, oder die pharmazeutisch akzeptablen Additionssalze desselben, repräsentiert durch die Strukturformel (I)

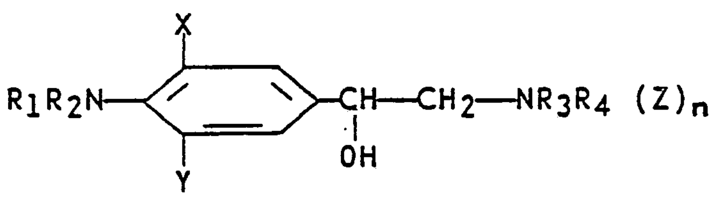

wobei $R_1$ für Wasserstoff oder $C_1$—$C_{14}$-Alkyl steht; $R_2$ für Wasserstoff oder Methyl steht, mit der Maßgabe, daß dann, wenn $R_1$ für $C_2$—$C_{14}$ steht, $R_2$ für Wasserstoff steht; $R_3$ und $R_4$ jeweils Wasserstoff oder $C_1$—$C_6$-Alkyl sind; X und Y jeweils Wasserstoff, Brom, Chlor, Fluor, Jod oder Cyano sind; Z für eine Säure steht, die zu pharmazeutisch akzeptablen Säureadditionssalzen derselben führt; und n eine ganze Zahl von 0 oder 1 ist.

8. Tierfutteradditivzusammensetzung gemäß Anspruch 7, wobei das antimikrobielle Mittel, wenn es in dem eßbaren Tierfutter verwendet wird, in Mengen anwesend ist, die auf Gewichtsbasis etwa 0,0001% bis 0,02% (1 bis 200 ppm) betragen und das substituierte 1-(Aminophenyl)-2-aminoethanol oder die pharmazeutisch akzeptablen Additionssalze desselben, wenn sie in der eßbaren Tierfutterzusammensetzung verwendet werden, in Mengen anwesend sind, die auf Gewichtbasis etwa 0,0000001% bis 0,001% (0,001 bis 10,0 ppm) betragen; und wobei Z für Chlorwasserstoffsäure, Phosphorsäure, Esigsäure, Propionsäure, Zitronensäure, Gluconsäure, Abietsäure, Ölsäure, Linolsäure, Linolensäure, Tallölfettsäure oder Mischungen derselben steht; und n für 1 steht.

9. Tierfutteradditivzusammensetzung gemäß Anspruch 8, wobei die Verbindung der Formel (I) 4-Amino-α[*tert*-butylamino)methyl]-3,5-dichlorobenzylalkohol ist; und wobei Z für Ölsäure steht; wobei die Verbindung der Formel (I) 5[1-Hydroxy-2-(isopropyl-amino)ethyl]anthranilonitril ist; oder wobei Z für Ölsäure steht, wenn die Formel (I) für 5[1-Hydroxy-2-(isopropylamino)ethyl]anthranilonitril steht.

10. Tierfutteradditivzusammensetzung gemäß Anspruch 9, wobei das antimikrobielle Mittel ausgewählt ist aus Anticoccidiosismitteln, wachstumsfördenden antimikrobiellen Mitteln, therapeutischen antimikrobiellen Mitteln oder Mischungen derselben.

11. Tierfutteradditivzusammensetzung gemäß Anspruch 10, wobei die Anticoccidiosismittel ausgewählt sind aus Prinicin, Salinomycin, Monensin, Naracin, Lasalocid, Robinedin, Aprinocid, Amprolium, Nicarbazin oder Mischungen derselben; wobei die wachstumsfördernden antimikrobiellen Mittel ausgewählt sind aus Avoparcin, Bacitracin-methylendisalicylat, Bacitracinzink, Virginiamycin, Penicillin, Chlorotetracyclin, Tylosin, Bambermycin, Oxytetracyclin, Erythromycin, Roxarson, Nitrovin, Carbadox oder Mischungen derselben; oder wobei die therapeutischen antimikrobiellen Mittel ausgewählt sind aus Tiamulin, Lincomycin, Oleondomycin, Neomycin, Dimetridazol, Furazolidon, Sulfa-Arzneimitteln, wie beispielsweise Sulfomethazin und Sulfamethoxypyridizin oder Mischungen derselben.

12. Tierfutteradditivzusammensetzung gemäß Anspruch 11, wobei das Anticoccidiosismittel Prinicin ist; wobei das wachstumsfördernde antimikrobielle Mittel Penicillin ist; oder wobei das therapeutische antimikrobielle Mittel Tiamulin ist.

13. Verfahren zur Steigerung der Futtereffizienz und zur Verbesserung der Fleisch-zu-Fett-Verhältnisse von warmblütigen Tieren, wobei das Verfahren dadurch gekennzeichnet ist, daß man den warmblütigen Tieren, wenn sie ein Alter von 7 Tagen erreicht haben, eine zur Steigerung der Futtereffizienz und zur Verbesserung des Fleisch-zu-Fett-Verhältnisses wirksame Menge einer eßbaren Tierfutterzusammensetung verabreicht, die ein antimikrobielles Mittel enthält, sowie ein substituiertes 1-(Aminophenyl)-2-aminoethanol, oder die pharmazeutisch akzeptablen Säureadditionssalze derselben, repräsentiert durch die Strukturformel (I)

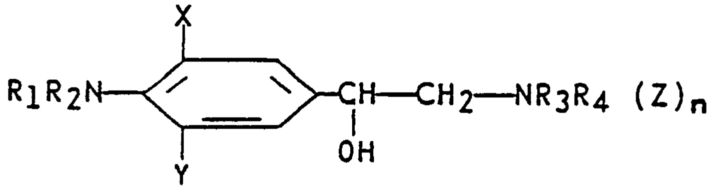

wobei $R_1$ für Wasserstoff oder $C_1$—$C_{14}$-Alkyl steht; $R_2$ für Wasserstoff oder Methyl steht, mit der Maßgabe, daß dann, wenn $R_1$ für $C_2$—$C_{14}$ steht, $R_2$ für Wasserstoff steht; $R_3$ und $R_4$ jeweils Wasserstoff oder $C_1$—$C_6$-Alkyl sind; X und Y jeweils Wasserstoff, Brom, Chlor, Fluor, Jod oder Cyano sind; Z für eine Säure steht, die zu pharmazeutisch akzeptablen Säureadditionssalzen derselben führt; und n eine ganze Zahl von 0 oder 1 ist.

14. Verfahren gemäß Anspruch 13, wobei das antimikrobielle Mittel in Mengen anwesend ist, die auf Gewichtsbasis etwa 0,0001% bis 0,02% (1 bis 200 ppm) betragen und wobei das substituierte 1-(Aminophenyl)-2-aminoethanol oder die pharmazeutisch akzeptablen Säureadditionsalze desselben in Mengen anwesend sind, die auf Gewichtsbasis etwa 0,0000001% bis 0,001% (0,001 bis 10,0 ppm) betragen; und wobei Z für Chlorwasserstoffsäure, Phosphorsäure, Esigsäure, Propionsäure, Zitronensäure, Gluconsäure, Abietsäure, Ölsäure, Linolsäure, Linolensäure, Tallölfettsäure oder Mischungen derselben steht; und n für 1 steht.

15. Verfahren gemäß Anspruch 14, wobei die Verbindung der Formel (I) 4-Amino-α[*tert*-butylamino)-methyl]-3,5-dichlorobenzylalkohol ist; und wobei das pharmazeutisch akzeptable Additionssalz der Formel (I) das der Ölsäure ist; wobei die Verbindung der Formel (I) 5[1-Hydroxy-2-(isopropylamino)ethyl]anthranilonitril ist; oder wobei Z für Ölsäure steht, wenn die Formel (I) für 5[1-hydroxy-2-(isopropylamino)ethyl]anthranilonitril steht.

16. Verfahren gemäß Anspruch 15, wobei das antimikrobielle Mittel ausgewählt ist aus Anticoccidiosismitteln, wachstumsfördernden antimikrobiellen Mitteln, therapeutischen antimikrobiellen Mitteln oder Mischungen derselben.

17. Verfahren gemäß Anspruch 16, wobei die Anticoccidiosismittel ausgewählt sind aus Prinicin, Salinomycin, Monensin, Naracin, Lasalocid, Robinedin, Aprinocid, Amprolium, Nicarabazin oder Mischungen derselben; wobei die wachstumsfördernden antimikrobiellen Mittel ausgewählt sind aus Avoparcin, Bacitracin-methylendisalicylat, Bacitracinzink, Virginiamycin, Penicillin, Chlorotetracyclin, Tylosin, Bambermycin, Oxytetracyclin, Erythromycin, Roxarsone, Nitrovin, Carbadox oder Mischungen derselben; wobei die therapeutischen antimikrobiellen Mittel ausgewählt sind aus Tiamulin, Lincomycin, Oleandomycin, Neomycin, Dimetridazol, Furazolidone, Sulfa-Arzneimitteln, wie beispielsweise Sulfomethazin und Sulfamethoxypyridizin oder Mischungen derselben.

18. Verfahren gemäß Anspruch 17, wobei das Anticoccidiosismittel Prinicin ist; wobei das wachstumsfördernde antimikrobielle Mittel Penicillin ist; oder wobei das therapeutische antimikrobielle Mittel Tiamulin ist.

**Revendications**

1. Composition alimentaire comestible pour animaux utilisée pour augmenter l'efficacité alimentaire et améliorer le rapport viande maigre/graisse chez les animaux à sang chaud, cette composition contenant un agent antimicrobien; et un 1-(aminophényl)-2-aminoéthanol substitué ou les sels d'addition aux acides

pharmaceutiquement acceptables de celui-di de formule développée (I),

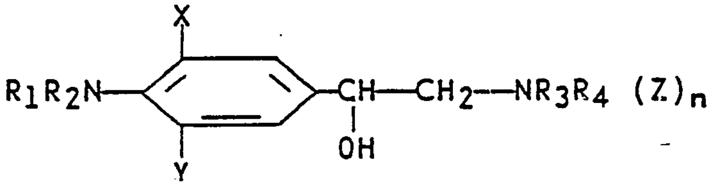

dans laquelle $R_1$ est l'atome d'hydrogène ou un alkyle en $C_1$—$C_{14}$; $R_2$ est l'atome d'hydrogène ou un groupe méthyle, à condition que lorsque $R_1$ est un alkyle en $C_2$—$C_{14}$, $R_2$ est l'atome d'hydrogène; $R_3$ et $R_4$ sont chacun l'atome d'hydrogène ou un alkyle en $C_1$—$C_6$; X et Y sont chacun un atome d'hydrogène, de brome, de chlore, de fluor, d'iode ou un groupe cyano; Z est un acide qui donne des sels d'addition aux acides pharmaceutiquement acceptables de celui-ci; et n'est l'entier 0 ou 1.

2. Composition alimentaire comestible pour animaux selon la revendication 1, dans laquelle cet agent antimicrobien est présent dans des quantités en poids d'environ 0,0001% à 0,02% (1 à 200 ppm); et cet 1-(aminophényl)-2-aminoéthanol substitué, ou les sels d'addition aux acides pharmaceutiquement acceptables de celui-ci, est présent dans des quantités en poids d'environ 0,0000001% à 0,001% (0,001 à 10,0 ppm); et dans laquelle Z est l'acide chlorhydrique, phosphorique, acétique, propionique, citrique, gluconique, abiétique, oléique, linoléique, linolénique, des acides gras de tallol ou des mélanges de ceux-ci; et n est 1.

3. Composition alimentaire comestible pour animaux selon la revendication 2, dans laquelle ce composé de formule (I) est l'alcool 4-amino-alpha[*tert*-butylamino)méthyl]-3,5 dichlorobenzylique; dans laquelle le sel d'addition aux acides pharmaceutiquement acceptable de formule (I) est l'acide oléique; dans laquelle le composé de formule (I) est le 5-[1-hydroxy-2-(isopropylamino)-éthyl]anthranilonitrile; ou dans laquelle Z est l'acide oléique lorsque la formule (I) est le 5-[1-hydroxy-2-(isopropylamino)-éthyl]anthranilonitrile.

4. Composition alimentaire comestible pour animaux selon la revendication 3, dans laquelle cet agent antimicrobien est choisi parmi des anti-coccidiens, des antimicrobiens accélérateurs de croissance, des antimicrobiens thérapeutiques, ou des mélanges de ceux-di.

5. Composition alimentaire comestible pour animaux selon la revendication 4, dans laquelle ces anti-coccidiens sont choisis parmi la prinicine, la salinomycine, la monensine, la naracine, le lasalocid, la robinédine, l'aprinocid, l'amprolium, la nicarbazine, ou des mélanges de ceux-ci; dans laquelle ces antimicrobiens accélérateurs de croissance sont choisis parmi l'avoparcine, le méthylène disalycilate de bacitracine, la bacitracine zinc, la virginiamycine, la pénicilline, la chlortétracycline, la tylosine, la bambermycine, l'oxytétracycline, l'érythromycine, la roxarsone, la nitrovine, le carbadox, ou des mélanges de ceux-ci; dans laquelle ces antimicrobiens thérapeutiques sont choisis parmi la tiamuline, la lincomycine, l'oléandomycine, la néomycine, le dimétridazole, la furazolidone, les médicaments de type sulfa comme la sulfaméthazine et la sulfaméthoxy pyridizine, ou des mélanges de ceux-ci.

6. Composition alimentaire comestible pour animaux selon la revendication 5, dans laquelle cet anti-coccidien est la prinicine; dans laquelle cet antimicrobien accélérateur de croissance est la pénicilline; dans laquelle cet antimicrobien thérapeutique est la tiamuline.

7. Composition d'additifs alimentaires comestible antimicrobienne pour animaux utilisée pour augmenter l'efficacité de l'alimentation et améliorer le rapport viande maigre/graisse des animaux à sang chaud, cette composition d'additifs alimentaires pour animaux étant caractérisée par une nourriture comestible animale; un agent antimicrobien; et un 1-(aminophényl)-2-aminoéthanol substitué ou les sels d'addition aux acides pharmaceutiquement acceptables de celui-ci, de formule développée (I),

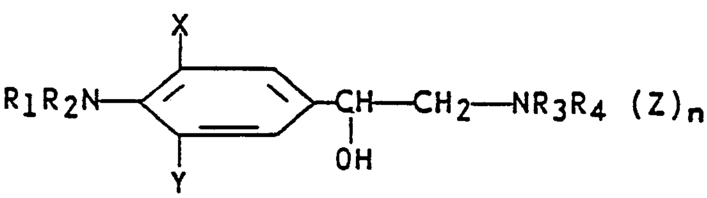

dans laquelle $R_1$ est l'atome d'hydrogène ou un alkyle en $C_1$—$C_{14}$; $R_2$ est l'atome d'hydrogène ou un groupe méthyle, à condition que lorsque $R_1$ est un alkyle en $C_2$—$C_{14}$, $R_2$ est l'atome d'hydrogène; $R_3$ et $R_4$ sont chacun l'atome d'hydrogène ou un alkyle en $C_1$—$C_6$; X et Y sont chacun un atome d'hydrogène, de brome, de chlore, de fluor, d'iode ou un groupe cyano; Z est un acide qui donne des sels d'addition aux acides pharmaceutiquement acceptables de celui-ci; et n est l'entier 0 ou 1.

8. Composition d'additifs alimentaires pour animaux selon la revendication 7, dans laquelle cet agent antimicrobien, lorsqu'il est utilisé dans cette nourriture comestible pour animaux, est présent dans des quantités en poids d'environ 0,0001% à 0,02% (1 à 200 ppm); et cet 1-(aminophényl)-2-aminoéthanol substitué, ou les sels d'addition aux acides pharmaceutiquement acceptables de celui-ci, lorsqu'il est utilisé dans cette composition alimentaire comestible pour animaux, est présent dans des quantités en poids

d'environ 0,0000001% à 0,001% (0,001 à 10,0 ppm); et dans laquelle Z est l'acide chlorhydrique, phosphorique, acétique, propionique, citrique, gluconique, abiétique, oléique, linoléique, linolénique, des acides gras de tallol ou des mélanges de ceux-ci; et n est 1.

9. Composition alimentaire comestible pour animaux selon la revendication 8, dans laquelle ce composé de formule (I) est l'alcool 4-amino-alpha[*tert*-butylamino)méthyl]-3,5 dichlorobenzylique; dans laquelle Z est l'acide oléique; dans laquelle ce composé de formule (I) est le 5-[1-hydroxy-2-(isopropylamino)-éthyl]anthranilonitrile; ou dans laquelle Z est l'acide oléique lorsque la formule (I) est le 5-[1-hydroxy-2-(isopropylamino)-éthyl]anthranilonitrile.

10. Composition d'additifs alimentaires pour animaux selon la revendication 9, dans laquelle cet agent antimicrobien est choisi parmi des anti-coccidiens, des antimicrobiens accélérateurs de croissance, des antimicrobiens thérapeutiques, ou des mélanges de ceux-ci.

11. Composition d'additifs alimentaires pour animaux selon la revendication 10, dans laquelle ces anti-coccidiens sont choisis parmi la prinicine, la salinomycine, la monensine, la naracine, le lasalocid, la robinédine, l'aprinocid, l'amprolium, la nicarbazine, ou des mélanges de ceux-ci; dans laquelle ces antimicrobiens accélérateurs de croissance sont choisis parmi l'avoparcine, le méthylène disalycilate de bacitracine, la bacitracine zinc, la virginiamycine, la pénicilline, la chlortétracycline, la tylosine, la bambermycine, l'oxytétracycline, l'érythromycine, la roxarsone, la nitrovine, le carbadox, ou des mélanges de ceux-ci; ou dans laquelle ces antimicrobiens thérapeutiques sont choisis parmi la tiamuline, la lincomycine, l'oléandomycine, la néomycine, le dimétridazole, la furazolidone, les médicaments de type sulfa comme la sulfaméthazine et la sulfaméthoxy pyridizine, ou des mélanges de ceux-ci.

12. Composition d'additifs alimentaires pour animaux selon la revendication 11, dans laquelle cet anti-coccidien est la prinicine; dans laquelle cet antimicrobien accélérateur de croissance est la pénicilline; ou dans laquelle cet antimicrobien thérapeutique est la tiamuline.

13. Procédé pour augmenter l'efficacité de l'alimentation et améliorer le rapport viande maigre/graisse des animaux à sang chaud, ce procédé étant caractérisé par l'administration d'une quantité augmentant l'efficacité de l'alimentation et améliorant le rapport viande maigre/graisse d'une composition alimentaire comestible pour animaux contenant un agent antimicrobien; et un 1-(aminophényl)-2-aminoéthanol substitué ou le sel d'addition aux acides pharmaceutiquement acceptable de celui-ci, de formule développée (I),

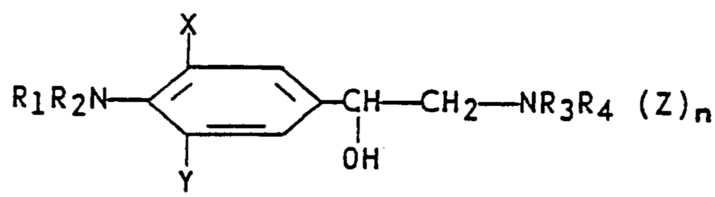

dans laquelle $R_1$ est l'atome d'hydrogène ou un alkyle en $C_1$—$C_{14}$; $R_2$ est l'atome d'hydrogène ou un groupe méthyle, à condition que lorsque $R_1$ est un alkyle en $C_2$—$C_{14}$, $R_2$ est l'atome d'hydrogène; $R_3$ et $R_4$ sont chacun l'atome d'hydrogène ou un alkyle en $C_1$—$C_6$; X et Y sont chacun un atome d'hydrogène, de brome, de chlore, de fluor, d'iode ou un groupe cyano; Z est un acide qui donne des sels d'addition aux acides pharmaceutiquement acceptables de celui-ci; et n est l'entier 0 ou 1; à ces animaux à sang chaud lorsqu'ils sont âgés de sept jours.

14. Procédé selon la revendication 13, dans lequel cet agent antimicrobien est présente dans des quantités en poids d'environ 0,0001% à 0,02% (1 à 200 ppm); et cet 1-(aminophényl)-2-aminoéthanol substitué, ou les sels d'addition aux acides pharmaceutiquement acceptables de celui-ci, lorsqu'il est utilisé dans cette composition alimentaire comestible pour animaux, est présent dans des quantités en poids d'environ 0,0000001% à 0,001% (0,001 à 10,0 ppm); et dans lequel Z est l'acide chlorhydrique, phosphorique, acétique, propionique, citrique, gluconique, abiétique, oléique, linoléique, linolénique, des acides gras de tallol ou des mélanges de ceux-ci; et n est 1.

15. Procédé selon la revendication 14, dans lequel ce composé de formule (I) est l'alcool 4-amino-alpha[*tert*-butylamino)méthyl]-3,5 dichlorobenzylique; dans lequel ce sel d'addition aux acides de formule (I) est l'acide oléique; dans lequel ce composé de formule (I) est le 5-[1-hydroxy-2-(isopropylamino)-éthyl]anthranilonitrile; ou dans lequel Z est l'acide oléique lorsque la formule (I) est le 5-[1-hydroxy-2-(isopropylamino)-éthyl]anthranilonitrile.

16. Procédé selon la revendication 15, dans lequel cet agent antimicrobien est choisi parmi des anti-coccidiens, des antimicrobiens accélérateurs de croissance, des antimicrobiens thérapeutiques, ou des mélanges de ceux-ci.

17. Procédé selon la revendication 16, dans lequel ces anti-coccidiens sont choisis parmi la prinicine, la salinomycine, la monensine, la naracine, le lasalocid, la robinédine, l'aprinocid, l'amprolium, la nicarbazine, ou des mélanges de ceux-ci; dans lequel ces antimicrobiens accélérateurs de croissance sont choisis parmi l'avoparcine, le méthylène disalycilate de bacitracine, la bacitracine zinc, la virginiamycine, la pénicilline, la chlortétracycline, la tylosine, la bambermycine, l'oxytétracycline, l'érythromycine, la roxarsone, la nitrovine, le carbadox, ou des mélanges de ceux-ci; ou dans laquelle ces antimicrobiens thérapeutiques sont choisis parmi la tiamuline, la lincomycine, l'oléandomycine, la néomycine, le

dimétridazole, la furazolidone, les médicaments de type sulfa comme la sulfaméthazine et la sulfaméthoxy-pyridizine, ou des mélanges de ceux-ci.

18. Procédé selon la revendication 17, dans lequel cet anti-coccidien est la prinicine; dans lequel cet antimicrobien accélérateur de croissance est la pénicilline; ou dans lequel cet antimicrobien thérapeutique est la tiamuline.